# EUROPEAN PATENT SPECIFICATION

(11) **EP 1 215 969 B1**
(45) Date of publication and mention of the grant of the patent: **29.06.2005**
(21) Application number: 00964812.2
(22) Date of filing: 15.09.2000
(51) Int. Cl.: A23G 1/00

(54) **MARSHMALLOW COMPRISING APPLE PUREE**
APFELPUREE-ENTHALTENDES MARSHMALLOW
GUIMAUVES A LA PUREE DE POMME

(30) Priority: 16.09.1999 RU 99119663
(43) Date of publication of application: 26.06.2002
(73) Proprietor: Otkrytoe Aktsionernoe Obschestvo "Konditerskaya Fabrika Udarnitsa", Moscow, 117049 (RU)
(72) Inventor: ANANIEVA, Tatiyana Vasilievna, Moscow, 117331 (RU)
(74) Representative: Lucking, David John
(86) International application number: PCT/RU2000/000367
(87) International publication number: WO 2001/022831

(56) References cited:
- WO-A-00/64272
- WO-A-99/65321
- GB-A- 2 111 367
- US-A- 4 100 304
- US-A- 4 390 450
- US-A- 4 410 552
- US-A- 4 555 417
- US-A- 5 182 114
- US-A- 5 429 830
- DATABASE WPI Section Ch, Week 199649 Derwent Publications Ltd., London, GB; Class A97, AN 1996-495760 XP002162603 & RU 2 055 480 C (KIEV CONFECTIONERY WKS), 10 March 1996 (1996-03-10)
- PATENT ABSTRACTS OF JAPAN vol. 018, no. 523 (C-1256), 4 October 1994 (1994-10-04) & JP 06 181691 A (MINOKATSU SHOKUHIN KK), 5 July 1994 (1994-07-05)
- DATABASE WPI Section Ch, Week 199711 Derwent Publications Ltd., London, GB; Class D13, AN 1997-117161 XP002162604 & RU 2 063 150 C (MOSC FOOD IND CORRESP INST), 10 July 1996 (1996-07-10)

## Description

The invention relates to the food industry and in particular to the confectionary industry, and can be used in the fluff products preparation technology.

There exists a chocolate covered marsh-mallow production technique that includes preparation of a gelling agent by way of swelling and subsequent washing it, preparation of a sugar-treacle syrup by way of mixing sugar and treacle and adding sodium lactate and the gelling agent, boiling the sugar-treacle syrup, apple sauce and acid and essence emulsion, beating such mixture until a marsh-mallow mass is obtained, formation of its structure and semimanufactured articles glazing.
RU, No. 2061312 C 1, A 23 G3 /00, 1996.

There exists a pectin-based marsh-mallow production technique that includes preparation of feedstock, preparation of a pectin-sugar apple syrup by way of dissolving pectin in water during boiling, adding of an apple sauce and water to it with subsequent mixing of the mixture, loading of sugar and sodium lactate and boiling of the syrup under pressure of heating steam, preparation of a formula mixture by way of adding treacle, white of the egg, acid, coloring agents and essences to the boiled syrup, beating of the formula mixture until a marsh-mallow mass is obtained, shaping, cooling and preliminary drying.
RU, No.2061313 C 1, A 23 G3 /00, 1996.

The deficiencies of these techniques are as follows: limited use of theses techniques, only for certain types of products, lack of quality of finished products, in particular of their structure.

The closest analog of the applied technique is a technique that includes preparation of a gelling agent - agar, by way of swelling, preparation of a syrup on its basis and subsequent boiling it under pressure, preparation of a formula mixture of a filler, foam former and prepared syrup, uninterruptible beating of it until the consistency of a marshmallow mass is obtained, shaping of semimanufactured articles of it and shaping of single products of them.
RU, No. 2056705 C 1, A 23 G 3 /00, 1996.

The deficiencies of this technique and products manufactured according to the given technique are as follows: impossibility to obtain a stable uniform structure and the consistency of a product, as well as difficulties in giving the same shape to each semimanufactured article.

Ru 2063150 discloses a marshmallow composition that comprises caster sugar, treacle, apple puree, citrus pectin, sodium lactate and a foam - forming agent. The latter is in the form of a dry finely dispersed powder of cheese whey protein concentrate.

WO 00/64 272 discloses a quickly dissolving derated confection, and a method for making the confection, eg a Marshmallow product. The product comprises a saccharide component eg sugar, a structuring agent eg gelatin, a whipping agent such as soy protein, and moisture.

RU 2055480 discloses a method of producing a marshmallow product comprising mixing pectin with apple puree, mixing these with sodium lactate, preparing a sugar treacle syrup, and preparing the marshmallow product by whipping the pectin /apple /lactate mixture, sugar and egg white, adding the syrup and other additives, forming the product. The product facilitates the removal of heavy metal salts and radiation nuclides from the body.

According to the invention there is provided a marshmallow formula mixture for marshmallows that contain one or at least two bonded shaped and structurized semimanufactured articles, produced as geometric figures with a smooth or relief surface, characterized in that it contains the components of the formula mixture in the following amounts (wt %): foam former 0,5 - 1,4, syrup 50 - 96, including gelling component 0,6 - 1,4, filler the rest, and the filler comprises apple puree.

Other features of the invention are set out in claims 2 to 20.

The technical result obtained by the applied technique and design of a product is an enhancement of qualitative values of a product, as far as both structural-mechanical properties and its shape are concerned.

Moreover, the applied technique provides for extension of possibilities of its use for preparation of marsh-mallow with any jelly ingredient.

The specified technical result is obtained in the marsh-mallow production technique that includes preparation of a gelling agent, preparation of a syrup on its basis with subsequent boiling it under pressure, preparation of a formula mixture of a filler, foam former and prepared syrup, uninterruptible beating of it until the consistency of a marshmallow mass is obtained, shaping of semimanufactured articles of it, structurization, preliminary drying of obtained articles and shaping of single products of them due to the fact that the formula mixture is prepared ensuring viscosity of 0,9ö2,3 Pa·sec at the speed gradient of 60-80sec⁻¹, in this case the ingredients of the formula mixture are taken in the following amounts (mas%):

| | |
|---|---|
| Foam former | 0,5 - 1,4 |
| Syrup | 50 - 96 |
| Including gelling agent | 0,6 - 1,4 |
| Filler | the rest. |

As well as that agar is used as a gelling agent, which is prepared by way of steeping it until it is swelled, sugar and treacle are used as ingredients for preparation of a syrup on its basis, sugar and food substances represented by a food acid and flavorings are added for preparation of a formula mixture, a blended mixture of apple sauce is used as a filler, white of the egg is used as a foam former, proportion of sugar used for preparation of a syrup and for preparation of a formula mixture is selected within the range of 0,92ö1,06, structurization of semimanufactured articles is carried out at the temperature of 18-25°C during not less than 2 hours, drying is carried out at the temperature of 34-38°C during not more than 6 hours, in this case the ingredients of the formula mixture are taken in the following amounts (mas%):

| | |
|---|---|
| Agar | 0,8 ö 1,1 |
| Treacle | 12 ö 14 |
| Blended mixture | 33 ö 38 |
| White of the egg | 0,5 ö 1,1 |
| Food acid | 0,5 ö 0,7 |
| Flavoring | 00,1 ö 0,15 |
| Sugar | the rest |

in this case buffer salt can be added to the syrup when it is boiled in the amount of 0,03-0,15% of the total mass of the syrup, return wastes and/or buffer salt can be added to the blended mixture in the amount of 5-20% and/or 0,04-0,3 % of the total mass of the formula mixture respectively, and pectin and/or apple powder in the amount of 0,05-90,25% of the total mass of the formula mixture can be put additionally.

As well as that pectin is used as a gelling agent, which is prepared by way of blending it with apple sauce and water, for preparation of a syrup on its basis, sugar and buffer salt are used as ingredients, food substances represented by a flavoring and food acid are loaded additionally into the formula mixture, treacle is used as a filler, and white of the egg is used as a foam former, in this case drying of semimanufactured articles is carried out at the temperature of 65-67°C during 7-10 minutes and the ingredients of the formula mixture are taken in the following amounts:

| | |
|---|---|
| Apple sauce | 18,0 ö 20,0 |
| Pectin | 1,0 ö 1,2 |
| Buffer salt | 0,2 ö 0,4 |
| Treacle | 5,0 ö 7,0 |
| White of the egg | 0,7 ö 0,9 |
| Flavoring | 0,01 ö 015 |
| Food acid | 0,5 ö 0,7 |
| Sugar | the rest |

in this case potassium preparations can be taken for preparation of pectin in the amount of 0,01-0,5mas% of the total mass of the formula mixture.

As well as that sodium or potassium lactates and citrates, or sodium or potassium tartrates can be used as buffer salt.

As well as that a food coloring agent can be loaded additionally in the amount of 0,0005 ö 0,05% of the total mass of the formula mixture.

As well as that in the course of shaping of semimanufactured articles a filling represented by boiled fruit and/or chocolate spread and/or milk cream is loaded under pressure to the center of the marsh-mallow mass.

As well as that a finishing material represented by sugar powder or wafer chips, or ground nuts, or chocolate, fondant or fat glaze is applied to the surface of a product.

The technical result is also obtained in marsh-mallow that contains one or at least two bonded shaped and structured semimanufactured articles made as geometric figures with a smooth or relief surface due to the fact that it is produced according to the applied technique.

As well as due to the fact that it can have a filling in the cavity of at least one semimanufactured marsh-mallow article in this case such cavity can be either in the closed space of the semimanufactured article or can be open from one side. And marsh-mallow can be covered with a layer of finishing material and/or can be multicolored.

The marsh-mallow production technique is implemented as follows:

First, a gelling agent is prepared, then, a syrup is prepared on its basis and boiled under pressure. A formula mixture is prepared of a filler, foam former and prepared syrup taken in the following amounts (mas%)

| | |
|---|---|
| Foam former | 0,5 ö 1,4 |
| Syrup | 50 ö 96 |
| Gelling agent | 0,6 ö 1,4 |
| Filler | the rest |

The formula mixture is prepared ensuring viscosity of 0,9-2,3 Pa•sec at the speed gradient of 60-80sec⁻¹, it is delivered for shaping with structurization, preliminary drying and shaping of single products.

Agar can be used as a gelling agent. It is prepared by way of soaking in water until it is swelled. For preparation of a syrup on its basis, sugar and treacle are used as ingredients, and for preparation of a formula mixture, sugar, food acids and a flavoring are loaded additionally, a blended mixture of apple sauce is used as a filler, white of the egg is used as a foam former, and proportion of sugar used for preparation of the formula mixture is selected within the range of 0,92-1,06. Structure of semimanufactured articles is formed at the temperature of 18-25°C during not less than 2 hours, drying is carried out at the temperature of 34-38°C during not more than 6 hours, and formula mixture ingredients are taken in the following amounts (mas%):

| | |
|---|---|
| Agar | 0,8 ö 1,1 |
| Treacle | 12 ö 14 |
| Blended mixture | 33 ö 38 |
| White of the egg | 0,5 ö 1,1 |
| Food acid | 0,5 ö 0,7 |
| Flavoring | 0,01 ö 0,15 |
| Sugar | the rest |

Buffer salt can be loaded additionally to a syrup while it is boiled in the amount of 0,03 ö 0,15% of the total mass of the syrup (or of the total mass of the formula mixture).

Apart of this, return wastes in the amount of 5ö20 mas% of the total mass of the formula mixture, buffer salt in the amount of 0,04ö0,3 mas% of the total mass of the formula mixture, pectin and/or apple powder in the amount of 0,05ö0,25 mas% of the total mass of the formula mixture can be loaded additionally to the blended mixture.

Pectin can be used as a gelling agent. It is prepared by way of mixing with an apple sauce and water. For preparation of a syrup on its basis, sugar and buffer salt are used as ingredients, food substances represented by a flavoring and food acid are loaded additionally to the formula mixture, treacle is used as a filler, white of the egg - as a foam former, in this case semimanufactured articles are dried at the temperature of 65-67°C during 7-10 minutes, and the formula mixture ingredients are taken in the following amounts (%):

| | |
|---|---|
| Apple sauce | 18,0 ö 20,0 |
| Pectin | 1,0 ö 1,2 |
| Buffer salt | 0,2 ö 0,4 |
| Treacle | 5,0 ö 7,0 |
| White of the egg | 0,7 ö 0,9 |
| Flavoring | 0,01 ö 0,15 |
| Food acid | 0,5 ö 0,7 |
| Sugar | the rest. |

Potassium preparations in the amount of 0,01 ö 0,5 mas% of the total mass of the formula mixture can be loaded additionally for preparation of pectin.

Sodium and potassium lactates and citrates, or sodium or potassium tartrates can be used as buffer salt for preparation of a syrup and blended mixture, and a food coloring agent can be loaded additionally to the formula mixture in the amount of 0,0005ö0,05% of the total mass of the formula mixture.

In the course of shaping, a filling represented by boiled fruit and/or chocolate spread, and/or milk cream can be put to the center of the marsh-mallow mass, at least of one semimanufactured marsh-mallow article, and a finishing material represented by sugar powder or wafer chips, or ground nuts, chocolate glaze, or fondant glaze can be applied to the surface of a product.

Marsh-mallow that contains one or at least two bonded shaped and structurized semimanufactured articles produced in the form of geometric figures with smooth and relief surfaces is a product made according to the applied technique of production.

Marsh-mallow can have a filling located in the cavity of at least one semimanufactured marsh-mallow product, in this case a cavity can be made in the closed space of a semimanufactured marsh-mallow article or can be open from one side.

Marsh-mallow can be covered with a layer of finishing material and/or can be multicolored.

Below is an example of implementation of the marsh-mallow production technique:

### Example 1.

First, a gelling agent, agar, is prepared by way of steeping until it is swelled. A syrup is prepared on its basis. Sugar and treacle are used as ingredients of the syrup. Then, it is boiled under pressure, in this case buffer salt is added while boiling, a formula mixture is prepared of a filler (blended mixture of apple sauce), foam former (white of the egg) and, apart of this, sugar and the prepared syrup are added.

Pectin and/or apple powder, or return wastes, and/or buffer salt can be added to the blended mixture. Proportion of sugar used for preparation of the syrup and for preparation of a formula mixture is selected within the range of 0,92ö1,06. The formula mixture is prepared ensuring viscosity of 0,9-2,3 Pa•sec at the speed gradient of 60-80 sec⁻¹.

A food coloring agent can be added to the formula mixture.

After a formula mixture is prepared it is uninterruptedly beaten until the consistency of a'marsh-mallow mass is obtained.

In the course of semimanufactured articles shaping, a filling can be put to the center of a marsh-mallow mass, at least of one semimanufactured article. Then, articles are structurized, dried and shaped to become a product to which a finishing material represented by sugar powder or wafer chips, or ground nuts, or chocolate glaze, or fondant glaze can be applied. Then, articles are stricturiazed at the temperature of 18-25°C during not less than two hours. After that, articles are dried at T=34-38°C during not more than 6 hours.

Table 1 shows the amounts of the ingredients to be taken.

**Table 1**

| Name of ingredient | Variants | | | |
|---|---|---|---|---|
| | I | II | III | IV |
| Agar, syrup, including | 0,8 | 0,9 | 1,0 | 1,1 |
| Treacle | 12 | 14 | - | 12 |
| Blended mixture | 33 | 34 | 36 | 38 |
| Return wastes (as a part of blended mixture) | 8,8 | - | - | 16,1 |
| Buffer salt (as a part of blended mixture) | - | 0,1 | - | 0,06 |
| Pectin or apple powder (as a part of blended mixture) | - | - | 0,2 | 0,05 |
| Buffer salt | - | - | 0 | 0,1% |
| White of the egg | 1,1 | 0,8 | 0,6 | 0,5 |
| Food acid | 0,5 | 0,55 | 0,65 | 0,7 |
| Flavoring | 0,01 | 0,07 | 0,1 | 0,15 |
| Food coloring agent | 0,0005 | 0,001 | 0,01 | 0,05 |
| sugar | the rest | the rest | the rest | the rest |

### Example 2.

First, a gelling agent - pectin - is prepared by way of mixing it with an apple sauce and water. Potassium preparations can be added for preparation of pectin. A syrup is prepared on its basis. Sugar and buffer salt are used as ingredients of syrup. Then, it is boiled under pressure. A formula mixture is prepared of a filler (treacle), foam former (white of the egg), prepared syrup, flavoring and food acid. The formula mixture is prepared ensuring viscosity of 0,9-2,3 Pa•sec with the speed gradient of 60-80 sec⁻¹. A food coloring agent can be added to the formula mixture. After the formula mixture is prepared, it is beaten uninterruptedly until the consistency of a marsh-mallow mass is obtained. Semimanufactured articles are shaped of the obtained mass.

During shaping of semimanufactured articles a filling can be loaded under pressure to the center of marsh-mallow mass, at least of one article. Then, semimanufactured articles are structurized, dried and shaped to get a product to which a finishing material represented by sugar powder or wafer ships, or ground nuts, or chocolate glaze, or fondant glaze can be applied. Then, articles are structurized and dried at the temperature of 65-67°C during 7-10 minutes and shaped to give a product - marsh-mallow.

Table 2 shows the amounts of the ingredients to be taken.

**Table 2**

| Ingredient name | Variants | |
|---|---|---|
| | I | II |
| Apple sauce | 18 | 20 |
| Pectin | 1,2 | 1,0 |
| Buffer salt | 0,2 | 0,4 |
| Treacle | 7,0 | 5,0 |
| White of the egg | 0,7 | 0,9 |
| Flavoring | 0,01 | 0,15 |
| Food acid | 0,05 | 0,07 |
| Potassium preparations | - | 0,25 |
| Food coloring agent | 0,025 | - |
| sugar | the rest | the rest |

## Claims

1. A Marshmallow formula mixture for marshmallows that contain one or at least two bonded shaped and structurized semimanufactured articles, produced as geometric figures with a smooth or relief surface, **characterised in that** it contains the components of the formula mixture in the following amounts (wt%):
| | |
|---|---|
| foam former | 0,5-1,4 |
| Syrup | 50 - 96 |
| Including gelling component | 0,6 - 1,4 |
| Filler | the rest |
and the filler comprises apple puree.

2. The marshmallow formula mixture of claim 1, **characterised by** the fact that it has a filling located in a cavity of at least one semimanufactured marshmallow article.

3. The marshmallow formula mixture of claim 1, **characterised by** the fact that a cavity with a filling is made in the closed space of the marshmallow semimanufactured article.

4. The marshmallow formula mixture of claim 1, **characterised by** the fact that the cavity with a filling is open from one side of the product.

5. The marshmallow formula mixture of any one of claims 1-4, **characterised by** the fact that it is covered with a layer of finishing material.

6. The marshmallow formula mixture of any one of claims 1-4, **characterised by** the fact that it is multicolored.

7. The marshmallow formula mixture of claim 1 **characterised by** the fact that the gelling component comprises agar.

8. The marshmallow formula mixture of claim 1 **characterised by** the fact that the syrup comprises the components of sugar and treacle.

9. The marshmallow formula mixture of claim 1 **characterised by** the fact that the formula mixture further comprises sugar and food substances represented by a food acid and a flavoring agent.

10. The marshmallow formula mixture of claim 1 **characterised by** the fact that the filler comprises a blended mixture of apple puree.

11. The marshmallow formula mixture of claim 1 **characterised by** the fact that the foam former comprises white of the egg.

12. The marshmallow formula mixture of claim 1 **characterised by** the fact that the syrup comprises sugar in the range of 0,92-1,06.

13. The marshmallow formula mixture of claim 1 **characterised by** the fact that the formula mixture comprises sugar in the range of 0,92-1,06.

14. The marshmallow formula mixture of claim 1 **characterised by** the fact that it contains components of the formula mixture taken in the following amounts (wt%)
| | |
|---|---|
| agar | 0,8 - 1,1 |
| treacle | 12 - 14 |
| blended mixture | 33 - 38 |
| white of the egg | 0,5 - 1,1 |
| food acid | 0,5 - 0,7 |
| flavoring agent | 0,01 - 0,15 |
| sugar | the rest |

15. The marshmallow formula mixture of claim 1 **characterised by** the fact that the syrup contains buffer salt in the amount of 0,03 - 0,15% of the total weight of the syrup (or of the total weight of the formula mixture).

16. The marshmallow formula mixture of claim 1 **characterised by** the fact that the mixture comprises return wastes in the amount of 5-20% of the total weight of the formula mixture.

17. The marshmallow formula mixture of claim 1 **characterised by** the fact that the mixture comprises buffer salt in the amount of 0,04-0,3 wt% of the total weight of the formula mixture.

18. The marshmallow formula mixture of claim 1 **characterised by** the fact that the mixture comprises pectin and/or apple powder in the amount of 0,05-0,25 wt% of the total weight of the formula mixture.

19. The marshmallow formula mixture of claim 15 or claim 17 **characterised by** the fact that the buffer salt comprises sodium or potassium lactates and citrates, or sodium or potassium tartrates.

20. The marshmallow formula mixture of claim 1 **characterised by** the fact that the mixture comprises a food coloring agent in the amount of 0,005-0,5 of the total weight of the formula mixture.

## Patentansprüche

1. Marshmallowrezepturmischung für Marshmallows, die einen oder wenigstens zwei formgebundene und strukturisierte Halbfertigware-Artikel enthalten, hergestellt als geometrische Figuren mit einer glatten oder unebenen Oberfläche, **dadurch gekennzeichnet daß** sie die Komponenten der Rezepturmischung in den folgenden Mengen (Gew.-%) enthält:
| | |
|---|---|
| Schaumbildner | 0,5-1,4 |
| Sirup | 50-96 |
| einschließend eine Gelierkomponente | 0,6-1,4 |
| Füllmaterial | Rest, |
und wobei das Füllmaterial Apfelpüree umfaßt.

2. Marshmallowrezepturmischung nach Anspruch 1, **dadurch gekennzeichnet, daß** sie eine Füllung aufweist, die in einer Aushöhlung wenigstens eines Marshmallow-Halbfertigware-Artikels angeordnet ist.

3. Marshmallowrezepturmischung nach Anspruch 1, **dadurch gekennzeichnet, daß** eine Aushöhlung mit einer Füllung in dem geschlossenen Raum des Marshmallow-Halbfertigware-Artikels hergestellt ist.

4. Marshmallowrezepturmischung nach Anspruch 1, **dadurch gekennzeichnet, daß** die Aushöhlung mit einer Füllung von einer Seite des Produkts offen ist.

5. Marshmallowrezepturmischung nach einem der Ansprüche 1 bis 4, **dadurch gekennzeichnet, daß** sie mit einer Abschlußmaterialschicht abgedeckt ist.

6. Marshmallowrezepturmischung nach einem der Ansprüche 1 bis 4, **dadurch gekennzeichnet, daß** sie mehrfach gefärbt ist.

7. Marshmallowrezepturmischung nach Anspruch 1, **dadurch gekennzeichnet, daß** die Gelierkomponente Agar umfaßt.

8. Marshmallowrezepturmischung nach Anspruch 1, **dadurch gekennzeichnet, daß** der Sirup die Komponenten Zucker und Melasse umfaßt.

9. Marshmallowrezepturmischung nach Anspruch 1, **dadurch gekennzeichnet, daß** die Rezepturmischung ferner Zucker und Lebensmittelsubstanzen umfaßt, die durch eine Genußsäure und einen Aromastoff dargestellt sind.

10. Marshmallowrezepturmischung nach Anspruch 1, **dadurch gekennzeichnet, daß** das Füllmaterial eine verschnittene Mischung von Apfelpüree umfaßt.

11. Marshmallowrezepturmischun nach Anspruch 1, **dadurch gekennzeichnet, daß** der Schaumbildner Eieiweiß umfaßt.

12. Marshmallowrezepturmischung nach Anspruch 1, **dadurch gekennzeichnet, daß** der Sirup Zucker im Bereich von 0,92-1,06 umfaßt.

13. Marshmallowrezepturmischung nach Anspruch 1, **dadurch gekennzeichnet, daß** die Rezepturmischung Zucker im Bereich von 0,92-1,06 umfaßt.

14. Marshmallowrezepturmischung nach Anspruch 1, **dadurch gekennzeichnet, daß** sie Komponenten der Rezepturmischung in den folgenden Mengen (Gew.-%) enthält:
| | |
|---|---|
| Agar | 0,8-1,1 |
| Melasse | 12-14 |
| verschnittene Mischung | 33-38 |
| Eieiweiß | 0,5-1,1 |
| Genußsäure | 0,5-0,7 |
| Aromastoff | 0,01-0,15 |
| Zucker | Rest |

15. Marshmallowrezepturmischung nach Anspruch 1, **dadurch gekennzeichnet, daß** der Sirup Puffersalz in der Menge von 0,03-0,15% des Gesamtgewichts des Sirups (oder des Gesamtgewichts der Rezepturmischung) enthält.

16. Marshmallowrezepturmischung nach Anspruch 1, **dadurch gekennzeichnet, daß** die Mischung Rücklaufabfälle in der Menge von 5-20% des Gesamtgewichts der Rezepturmischung umfaßt.

17. Marshmallowrezepturmischung nach Anspruch 1, **dadurch gekennzeichnet, daß** die Mischung Puffersalz in der Menge von 0,04-0,3 Gew.-% des Gesamtgewichts der Rezepturmischung umfaßt.

18. Marshmallowrezepturmischung nach Anspruch 1, **dadurch gekennzeichnet, daß** die Mischung Pektin und/oder Apfelpulver in der Menge von 0,05-0,25 Gew.-% des Gesamtgewichts der Rezepturmischung umfaßt.

19. Marshmallowrezepturmischung nach Anspruch 15 oder Anspruch 17, **dadurch gekennzeichnet, daß** das Puffersalz Natrium- oder Kaliumlactate und -citrat, oder Natrium- oder Kaliumtartrate umfaßt.

20. Marshmallowrezepturmischung nach Anspruch 1, **dadurch gekennzeichnet, daß** die Mischung einen Lebensmittelfarbstoff in der Menge von 0,005-0,5 des Gesamtgewichts der Rezepturmischung umfaßt.

## Revendications

1. Mélange de formulation pour guimauve destiné à des guimauves qui contiennent un ou au moins deux articles semi-finis liés, mis en forme et structurés, produits sous forme de figures géométriques avec une surface lisse ou en relief, **caractérisé en ce qu'**il contient les composants du mélange de formulation dans les quantités suivantes (% en poids) :
| | |
|---|---|
| Générateur de mousse | 0,5 à 1,4 |
| Sirop | 50 à 96 |
| Incluant le composant gélifiant | 0,6 à 1,4 |
| Charge | le reste |
et la charge comprend de la purée de pomme.

2. Mélange de formulation pour guimauve selon la revendication 2, **caractérisé par le fait qu'**il possède une charge située dans une cavité d'au moins un article en guimauve semi-fini.

3. Mélange de formulation pour guimauve selon la revendication 1, **caractérisé par le fait qu'**une cavité avec une charge est ménagée dans l'espace clos de l'article semi-fini en guimauve.

4. Mélange de formulation pour guimauve selon la revendication 1, **caractérise par le fait que** la cavité avec une charge est ouverte sur un côté du produit.

5. Mélange de formulation pour guimauve selon l'une quelconque des revendications 1 à 4, **caractérisé par le fait qu'**il est recouvert d'une couche de matériau de finition.

6. Mélange de formulation pour guimauve selon l'une quelconque des revendications 1 à 4, **caractérisé par le fait qu'**il est multicolore.

7. Mélange de formulation pour guimauve selon la revendication 1, **caractérisé par le fait que** le composant gélifiant comprend de la gélose.

8. Mélange de formulation pour guimauve selon la revendication 1, **caractérisé par le fait que** le sirop comprend les composante de sucre et de mélasse.

9. Mélange de formulation pour guimauve selon la revendication 1, **caractérisé par le fait que** le mélange de formulation comprend en outre des substances sucrées et alimentaires représentées par un acide alimentaire et un aromatisant.

10. Mélange de formulation pour guimauve selon la revendication 1, **caractérisé par le fait que** la charge comprend un mélange enrichi de purée de pomme.

11. Mélange de formulation pour guimauve selon la revendication 1, **caractérise par le fait que** le générateur de mousse comprend le blanc d'oeuf.

12. Mélange de formulation pour guimauve selon la revendication 1, **caractérisé par le fait que** le sirop comprend du sucre dans la plage de 0,92 à 1,06.

13. Mélange de formulation pour guimauve selon la revendication 1, **caractérisé par le fait que** le mélange de formulation comprend du sucre dans la plage de 0,92 à 1,06.

14. Mélange de formulation pour guimauve selon la revendication 1, **caractérisé par le fait qu'**il contient des composants du mélange de formulation pris dans les quantités suivantes (% en poids) :
| | |
|---|---|
| Gélose | 0,8 à 1,1 |
| Mêlasse | 12 à 14 |
| Mélange enrichi | 33 à 38 |
| Blanc d'oeuf | 0,5 à 1,1 |
| Acide alimentaire | 0,5 à 0,7 |
| Aromatisant | 0,01 à 0,15 |
| Sucre | le reste |

15. Mélange de Formulation pour guimauve selon la revendication 1, **caractérise par le fait que** le sirop contient un sel tampon dans la quantité de 0,03 à 0,15 % du poids total du sirop (ou du poids total du mélange de formulation).

16. Mélange de formulation pour guimauve selon la revendication 1, **caractérisé par le fait que** le mélange comprend des déchets de retour dans la quantité de 5 à 20 % du poids total du mélange de formulation.

17. Mélange de formulation pour guimauve selon la revendication 1, **caractérisé par le fait que** le mélange comprend un sel tampon dans la quantité de 0,04 à 0,3 % en poids du poids total du mélange de formulation.

18. Mélange de formulation pour guimauve selon la revendication 1, **caractérisé par le fait que** le mélange comprend de la pectine et/ou de la poudre de pomme dans la quantité de 0,05 à 0,25 % en poids du poids total du mélange de formulation.

19. Mélange de formulation pour guimauve selon la revendication 15 ou la revendication 17, **caractérisé par le fait que** le sel tampon comprend des lactates et des citrates de sodium ou de potassium, ou des tartrates de sodium ou de potassium.

20. Mélange de formulation pour guimauve selon la revendication 1, **caractérisé par le fait que** le mélange comprend un colorant alimentaire dans la quantité de 0,005 à 0,5 du poids total du mélange de formulation.
